# FASCICULE DE BREVET EUROPEEN

(11) **EP 2 802 539 B1**
(45) Date de publication et mention de la délivrance du brevet: **08.03.2017**
(21) Numéro de dépôt: 13701839.6
(22) Date de dépôt: 08.01.2013
(51) Int. Cl.: C02F 3/32, C02F 3/10, C02F 3/34

(54) **DISPOSITIF D'ASSAINISSEMENT D'UNE EAU USÉE LIQUIDE ET PROCÉDÉ D'ASSAINISSEMENT D'UNE EAU USÉE LIQUIDE METTANT EN OEUVRE UN TEL DISPOSITIF**
VORRICHTUNG ZUR REINIGUNG VON ABWASSER UND VERFAHREN ZUM REINIGEN VON ABWASSER MIT DIESER VORRICHTUNG
DEVICE FOR PURIFYING LIQUID WASTEWATER, AND METHOD FOR CLEANING LIQUID WASTEWATER USING SAID DEVICE

(30) Priorité: 12.01.2012 FR 1200091
(43) Date de publication de la demande: 19.11.2014
(73) Titulaire: Centre National de la Recherche Scientifique (C.N.R.S.), 75794 Paris Cedex 16 (FR); Institut National Polytechnique de Toulouse (INPT), 31029 Toulouse Cedex 4 (FR); Université Paul Sabatier (Toulouse III), 31062 Toulouse Cedex 9 (FR)
(72) Inventeur: GERINO, Magali, F-31450 Odars (FR); VERVIER, Philippe, F-31750 Escalquens (FR); SANCHEZ PEREZ, José Miguel, F-31120 Roques (FR); GAUTHIER, Laury, F-31400 Toulouse (FR)
(74) Mandataire: Cabinet BARRE LAFORGUE & associés
(86) Numéro de dépôt international: PCT/FR2013/050033
(87) Numéro de publication internationale: WO 2013/104857

(56) Documents cités:
- WO-A1-02/055442
- WO-A1-2005/097688
- US-A- 3 503 876

## Description

L'invention concerne un dispositif d'assainissement d'une eau usée liquide et un procédé d'assainissement d'une eau usée liquide mettant en oeuvre un tel dispositif. En particulier, l'invention concerne un tel dispositif d'assainissement et un procédé d'assainissement d'une eau usée liquide en vue de sa détoxification. En particulier, l'invention concerne un dispositif et un procédé d'assainissement d'une eau contaminée par de l'azote -notamment sous forme de nitrate, de nitrite ou d'ammoniaque- et/ou par au moins un composé phytosanitaire -notamment par un biocide-. Il peut s'agir de l'eau d'une nappe phréatique qui est issue du ruissellement des eaux de pluie et qui est contaminée lors de la lixiviation de sols pollués -notamment par des fertilisants tels que les nitrates, ou par des composés phytosanitaires utilisés en agriculture-. L'invention concerne aussi un procédé d'assainissement d'une eau liquide -notamment d'une eau de ruissellement, d'une eau domestique usée ou d'une eau industrielle contaminée par des composés médicamenteux ou d'une eau usée d'origine agricole- dans lequel on met en oeuvre un tel dispositif d'assainissement d'une eau usée liquide.

De tels dispositif et procédé trouvent leurs applications dans le domaine de l'assainissement d'une eau liquide -notamment d'une eau de ruissellement, d'une eau domestique usée ou d'une eau industrielle contaminée-pour lequel sont recherchées des solutions qui sont respectueuses de l'environnement.

L'invention vise à proposer un dispositif et un procédé d'assainissement d'une eau usée liquide -notamment d'une eau de ruissellement, d'une eau domestique usée ou d'une eau industrielle contaminée- susceptibles d'être mis en oeuvre à échelle réduite au niveau d'un laboratoire ou d'une habitation, mais aussi à l'échelle industrielle au niveau d'une station industrielle et/ou agricole d'épuration des eaux.

On connaît déjà des dispositifs d'analyse, dits « microcosmes », adaptés pour modéliser et permettre l'étude du rôle de vers oligochètes sur le traitement de matière organique et de nutriment dans la zone hyporhéique. Un tel dispositif décrit dans (Mermillod-Blondin et al, (2000) Arch. Hydrobiol, 149;3, 467-487) comprend une colonne de filtration renfermant une phase stationnaire filtrante formée de couches superposées et alternées de gravier et de sable, ladite phase stationnaire filtrante étant adaptée pour permettre l'écoulement de l'eau, le sable de la phase filtrante ayant été mis en contact avec une composition de bactéries, préalablement à sa mise en place dans le dispositif de filtration, ladite phase filtrante comprenant en outre 50 ou 100 vers d'une espèce oligochètes choisis parmi les vers oligochètes *Limnodrilus hoffmeisteri,* les vers oligochètes *Limnodrilus claparedeanus* et des vers oligochètes *Tubifex tubifex* chaque ver oligochète présentant un volume de l'ordre de 4 mm³.

Un tel dispositif est limité dans ses applications à l'étude et la modélisation du rôle de vers oligochètes à l'interface solide/liquide d'une colonne de filtration. Il ne permet pas l'assainissement d'une eau usée vis-à-vis des engrais agricoles -en particulier les nitrates- et/ou de composés phytosanitaires -notamment des biocides-. Un tel dispositif est en outre limité dans sa structure à un dispositif comprenant des vers oligochètes.

On connait aussi de WO 02/055442 un dispositif de traitement en mer d'un effluent.

L'invention vise à pallier les inconvénients précédemment évoqués en fournissant un dispositif et un procédé d'assainissement d'une eau usée liquide par voie biologique. En particulier, un tel dispositif et un tel procédé ne nécessitent pas l'utilisation de composés chimiques de neutralisation des engrais et/ou des composés phytosanitaires.

L'invention vise en particulier un dispositif et un procédé d'assainissement d'une eau usée liquide qui présente une efficacité d'assainissement qui est améliorée par rapport aux traitements biologiques mettant en oeuvre uniquement des micro-organismes.

L'invention vise également à atteindre tous ces objectifs à moindre coût, en proposant un dispositif d'assainissement d'une eau usée liquide de faible coût de revient réalisé à partir de moyens -notamment d'organismes vivants-qui sont disponibles sur la surface solide immergée d'un cours d'eau naturel ou d'un cours d'eau artificiel -notamment dans un bassin d'élevage-.

L'invention vise de surcroît à proposer un tel dispositif et un tel procédé d'assainissement d'une eau usée liquide qui préserve les habitudes de travail des personnels, soit facile à utiliser, et n'implique pour sa mise en oeuvre que peu de manipulations.

Pour ce faire, l'invention concerne un dispositif d'assainissement d'une eau usée liquide, comprenant :
- un contenant adapté pour retenir un granulat formé de particules solides et pour permettre un contact entre les particules solides du granulat et ladite eau usée liquide s'écoulant dans ledit contenant entre :
   ∘ une entrée de ladite eau usée liquide dans ledit contenant, et ;
   ∘ une sortie d'une eau sensiblement décontaminée du contenant ;
- une communauté, dite communauté de micro-organismes, d'au moins une espèce de micro-organisme s'étendant en surface et au contact des particules solides du granulat et formant une matrice adaptée au développement de ladite communauté de micro-organismes ;
- au moins un invertébré benthique vivant choisi dans le groupe formé des invertébrés benthiques vivants, dits organismes macro-benthiques, présentant une taille moyenne supérieure à 250 µm, le(s)dit(s) organisme(s) macro-benthique(s) étant réparti(s) dans le granulat ;
- au moins un invertébré benthique vivant, choisi dans le groupe formé des invertébrés benthiques vivants, dits organismes méio-benthiques, présentant une taille moyenne comprise entre 50 µm et 250 µm, le(s)dit(s) organisme(s) méio-benthique(s) étant réparti(s) dans le granulat ;
caractérisé en ce que les organismes macro-benthiques et les organismes méio-benthiques forment une communauté d'espèce(s) d'organismes invertébrés benthiques comprenant une proportion d'organismes invertébrés détritivores, exprimée en pourcentage du poids sec des organismes invertébrés détritivores et du poids sec des organismes invertébrés benthiques de ladite communauté d'espèce(s), comprise entre 60% et 80% -notamment de l'ordre de 75%-.

Dans tout le texte, on entend par « invertébré benthique » un organisme pluricellulaire invertébré vivant, à son état naturel, dans un milieu aquatique au niveau du « *benthos* », c'est-à-dire à l'interface liquide/solide d'un substrat (sédiments, végétaux) solide immergé, par exemple d'un cours d'eau -tel qu'une rivière, un fleuve, un ruisseau, un marais ou un lac-. Il peut s'agir d'organismes pluricellulaires vivants au niveau de ladite interface liquide/solide dans le milieu liquide, ou d'organismes pluricellulaires vivants à proximité de l'interface liquide/solide dans le milieu solide.

Avantageusement et selon l'invention, les organismes macro-benthiques, les organismes méio-benthiques et les organismes invertébrés détritivores sont des organismes dulçaquicoles, c'est-à-dire des organismes vivants exclusivement en eau douce.

On détermine la « taille moyenne » d'un invertébré benthique, par tamisage d'une communauté d'espèce(s) d'invertébrés benthiques vivants à travers un tamis à maille carrée de dimension -notamment de côté- prédéterminée susceptible de retenir au moins une partie de ladite communauté d'espèce(s) d'invertébrés benthiques vivants. On attribue aux invertébrés benthiques vivants retenus dans le tamis une taille au moins supérieure à la dimension prédéterminée de la maille carrée du tamis. A titre d'exemple, l'utilisation d'un tamis à maille carrée de 250 µm de côté permet de retenir les invertébrés benthiques vivants de la communauté d'espèce(s) qui présentent une taille moyenne supérieure à 250 µm. On détermine que la taille moyenne d'invertébrés benthiques vivants d'une communauté d'espèce(s) d'invertébrés benthiques vivants est comprise entre 50µm et 250 µm en réalisant successivement une première étape de tamisage de ladite communauté d'espèce(s) d'invertébrés benthiques vivants sur un tamis à mailles carrées de 250 µm de côté puis une deuxième étape de tamisage des invertébrés benthiques vivants non retenus sur le tamis de 250 µm réalisé au moyen d'un tamis à maille carrée de 50 µm de côté. Les invertébrés benthiques vivants retenus sur le tamis à mailles carrées de 50 µm présentent une taille moyenne comprise entre 50 µm et 250 µm.

Avantageusement, le dispositif selon l'invention comprend une pluralité d'invertébrés benthiques vivants choisis dans le groupe formé des invertébrés benthiques vivants, dits organismes macro-benthiques, présentant une taille moyenne supérieure à 250 µm. Il comprend en outre une pluralité d'invertébré benthique vivant choisi dans le groupe formé des invertébrés benthiques vivants, dits organismes méio-benthiques, présentant une taille moyenne comprise entre 50 µm et 250 µm.

On détermine le caractère détritivore d'un organisme macro-benthique et d'un organisme méio-benthique en référence au mode nutritionnel dudit organisme macro-benthique ou méio-benthique. On classe parmi les organismes invertébrés détritivores, les organismes macro-benthiques et méio-benthiques se nourrissant :
- de matière organique morte accumulée en surface des sédiments et dans les sédiments (on parle alors d'organismes collecteurs) ;
- de la matière organique particulaire (on parle d'organismes déchiqueteurs ou « *shredders* ») ;
- du biofilm développé sur support minéral ou organique -notamment vivant- (ou « *scrappers* ») *(*Merritt R. W. and Cummins K. W., (1984), 2ème Édition, Kendal Éditeur pp 59-64. An introduction to the aquatic insects of North America*).*

Un dispositif selon l'invention comprend un granulat formé de particules solides. Ces particules solides peuvent être des particules solides minérales, c'est-à-dire des particules solides ne comprenant pas de carbone (à l'exception des carbonates). Ces particules solides peuvent être des particules solides d'une roche à l'état divisé, notamment un sable, un gravier ou tout autre granulat minéral. Ces particules solides peuvent aussi être des particules solides organiques, c'est-à-dire des particules solides formées d'un matériau comprenant du carbone. Il peut s'agir de polymères -notamment de polymères synthétiques-insolubles dans l'eau et présentant une granulométrie adaptée pour permettre le développement d'une communauté d'espèce(s) de micro-organisme(s) en surface desdites particules solides et la formation d'un « biofilm ».

Un tel granulat peut aussi comprendre de la matière organique particulaire du type de débris de végétaux et d'animaux. De tels débris sont en particuliers présents au niveau de l'interface eau-sédiment du milieu naturel ou dans le granulat prélevé dans le milieu naturel.

Avantageusement, un tel granulat est constitué d'un matériau solide à l'état divisé. Il peut s'agir d'un sable naturel -notamment prélevé dans le lit d'un cours d'eau-. Il peut aussi s'agir d'un gravier ou d'un granulat de construction présentant une granulométrie adaptée pour pouvoir permettre un écoulement d'eau à travers les interstices ménagés entre les particules solides dudit granulat.

Avantageusement, un tel granulat est formé de particules solides présentant une distribution granulométrique monomodale. Par distribution granulométrique monomodale, on entend une distribution granulométrique dans laquelle la courbe, dite courbe enveloppe, des fréquences relatives des particules solides d'un granulat en fonction de la taille -ou plus généralement du logarithme de la taille- desdites particules peut, par exemple, se présenter sous la forme d'une gaussienne. Il peut s'agir d'une gaussienne de largeur plus ou moins importante.

Cependant, un tel granulat peut être formé de particules solides présentant une distribution granulométrique multimodale. Dans ce cas, la courbe enveloppe de répartition granulométrique desdites particules solides du granulat présente plusieurs pics distincts. A titre d'exemple non limitatif, la distribution granulométrique des particules solides du granulat est une distribution granulométrique bimodale ou multimodale.

Avantageusement, les particules solides du granulat présentent une distribution spatiale sensiblement homogène dans le contenant. Par distribution spatiale sensiblement homogène, on entend que les particules solides du granulat sont distribuées dans le contenant de façon sensiblement homogène en regard de leur distribution granulométrique -l'ensemble des particules solides de grande taille, l'ensemble des particules solides petite taille et l'ensemble des particules de taille intermédiaire présentant chacun une distribution spatiale sensiblement homogène dans le contenant. Il est possible que dans un dispositif selon l'invention, les particules solides du granulat présentent une alternance aléatoire de couches de particules solides de granulométrie déterminée et dans laquelle la position de chacune des couches de particules solide ne dépend pas de la granulométrie déterminée. En ce sens, un dispositif selon l'invention ne présente pas une succession de couches de particules solides dans laquelle lesdites couches s'étendent sensiblement horizontalement et sont empilées les unes sur les autres selon un gradient de granulométrie décroissante à partir de la couche de particules solides la plus profonde vers la couche de particules solides la plus superficielle.

Il est possible que les particules solides du granulat soient réparties dans le contenant sous la forme de couches de particules solides superposées, chaque couche de la superposition de couche présentant une distribution granulométrie moyenne. Cependant, dans un dispositif selon l'invention, les couches successives de particules solides de granulométries moyennes distinctes se succèdent de façon aléatoire sur toute la hauteur du dispositif selon l'invention.

Avantageusement, les particules solides du granulat présentent une granulométrie moyenne comprise entre 0,1 mm et 20 mm. Avantageusement, les particules solides du granulat sont disposées dans le contenant sous forme de couches successives chaque couche présentant une granulométrie moyenne de valeur choisie parmi 0,1 mm, 0,5 mm et 15 mm.

Avantageusement, le granulat du dispositif selon l'invention est adapté pour pouvoir permettre sa colonisation par des espèces microbiennes présentes dans l'eau de rivière et pour former un « biofilm » en surface des particules solides du granulat.

Les inventeurs pensent que la présence d'organismes macro-benthiques et d'organismes méio-benthiques dans le dispositif d'assainissement d'eau usée selon l'invention permet un broutage et un renouvellement de la communauté de micro-organismes (« biofilm ») s'étendant en surface des particules solides du granulat. Les inventeurs supposent que ce broutage de la communauté de micro-organismes augmente le renouvellement de la communauté de micro-organismes, permet la sélection d'une communauté de micro-organismes apte à permettre la dégradation du (des) polluant(s) présents dans l'eau usée à traiter et favorise la dégradation des polluants de l'eau usée par le « biofilm » et la production d'une eau sensiblement décontaminée.

Les inventeurs ont observé que la combinaison du(des) organisme(s) macro-benthique(s) et du(des) organisme(s) méio-benthique(s) -en particulier de la communauté d'espèce(s) d'organismes invertébrés benthiques comprenant une proportion d'organismes invertébrés détritivores comprise entre 60% et 80% permet de conserver une porosité du granulat sensiblement constante lors de l'utilisation du dispositif d'assainissement en évitant le colmatage dudit dispositif d'assainissement au cours du temps, qui est observé en absence de la communauté d'espèce(s) d'invertébrés vivants macro-benthiques et méio-benthiques. En fait, ce colmatage est dû au développement non contrôlé de la communauté d'espèce(s) de micro-organismes et à l'augmentation du taux de matière carbonée dans le dispositif d'assainissement.

Avantageusement, le contenant est un contenant manufacturé. Il peut s'agir d'une colonne de filtration ou d'un bassin ouvert de traitement d'une eau usée.

Avantageusement et selon l'invention, le granulat présente une porosité moyenne dans le contenant comprise entre 20% et 40%, notamment de l'ordre de 30%. Par « porosité moyenne » du granulat, on entend le rapport ramené à 100 entre le volume vacant susceptible d'être occupé par l'eau dans le granulat et le volume dudit granulat. Les inventeurs ont observé qu'une telle porosité moyenne du granulat est adaptée pour permettre d'une part le développement d'un biofilm de micro-organismes et l'assainissement d'une eau usée liquide, mais aussi d'obtenir une vitesse d'écoulement de l'eau à travers le granulat dans le contenant adaptée pour permettre un tel assainissement.

Avantageusement et selon l'invention, les organismes macro-benthiques sont choisis dans le groupe formé des organismes de l'embranchement des achètes, des organismes de l'embranchement des oligochètes, des organismes de l'embranchement des arthropodes -notamment des organismes de l'ordre des diptères, des organismes de l'ordre des trichoptères, des organismes de l'ordre des coléoptères, des organismes du sous-ordre des hétéroptères, des organismes de l'ordre des odonates, des organismes de l'ordre des plécoptères, des organismes de l'ordre des éphéméroptères et des organismes du sous-embranchement des crustacés- et des organismes de l'embranchement des mollusques -notamment des organismes de la classe des gastéropodes et des organismes de la classe des bivalves-.

Avantageusement, les organismes macro-benthiques sont choisis dans le groupe formé des organismes macro-benthiques du sous-groupe des *Ancylidae,* du sous-groupe des *Aphelocheirus,* du sous-groupe des *Aselidae,* du sous-groupe des *Athericidae,* du sous-groupe des *Baetidae,* du sous-groupe des *Brachyptera,* du sous-groupe des *Caenidae,* du sous-groupe des *Ceratopogonidae,* du sous-groupe des *Chironominae,* du sous-groupe des *Chrysomelidae,* du sous-groupe des *Dryopidae,* du sous-groupe des *Ecnomidae,* du sous-groupe des *Elmidae,* du sous-groupe des *Empididae,* du sous-groupe des *Ephemerellidae,* du sous-groupe des *Gammaridae,* du sous-groupe des *Haliplidae,* du sous-groupe des *Heptageniidae,* du sous-groupe des *Hydrophilidae,* du sous-groupe des *Hydroptilidae,* du sous-groupe des *Hydropsychidae,* du sous-groupe des *Leptoceridae,* du sous-groupe des *Leuctridae,* du sous-groupe des *Limoniidae,* du sous-groupe des *Lymaeidae,* du sous-groupe des *Naïdidae,* du sous-groupe des *Nemouridae,* du sous-groupe des *Niphargidae,* du sous-groupe des *Orthocladiinae,* du sous-groupe des *Ptychopteridae,* du sous-groupe des *Potamanthidae,* du sous-groupe des *Rhyacophilidae,* du sous-groupe des *Simuliidae,* du sous-groupe des *Tabanidae,* du sous-groupe des *Taerioptenygidae,* du sous-groupe des *Tanypodinae,* du sous-groupe des *Tipulidea,* du sous-groupe des *Tubificidae,* du sous-groupe des *Polycentropodidae,* du sous-groupe des *Ptychopteridae* et du sous-groupe des *Psychodidae.*

Avantageusement et selon l'invention, les organismes méio-benthiques sont choisis dans le groupe formé des organismes de l'embranchement des némathelminthes, des organismes de l'embranchement des cladocères, des organismes de l'embranchement des rotifères, des organismes de l'embranchement des copépodes, des organismes de l'embranchement des gastrotriches et des organismes de l'embranchement des foraminifères et des organismes de l'embranchement des tardigrades.

Avantageusement, les organismes méio-benthiques sont choisis dans le groupe formé des organismes méio-benthiques du sous-groupe des *Bdelloides,* du sous-groupe des *Brachionus,* du sous-groupe des *Cephalodella,* du sous-groupe des *Cyclopidae* ou *Cyclopoïda,* du sous-groupe des *Dicranophorus,* du sous-groupe des *Colurella,* du sous-groupe des *Enchytraeidae,* du sous-groupe des *Euchlanis,* du sous-groupe des *Filinia,* du sous-groupe des *Gastropus,* du sous-groupe des *Harpacticoides,* du sous-groupe des *Hydracarina,* du sous-groupe des *Keratella,* du sous-groupe des *Lecane,* du sous-groupe des *Lepadella,* du sous-groupe des *Lophocharis,* du sous-groupe des *Nauplius,* du sous-groupe des *Notholca,* du sous-groupe des *Pleurotrocha,* du sous-groupe des *Polyarthra,* du sous-groupe des *Proales,* du sous-groupe des *Synchetta,* du sous-groupe des *Trichocerca,* du sous-groupe des *Trichotria* et du sous-groupe des *Trombidiformes.*

Avantageusement et selon l'invention, la communauté de micro-organismes comprend des micro-organismes unicellulaires choisis dans le groupe formé des bactéries, des algues, des champignons et des protozoaires.

On détermine la présence de la communauté de micro-organismes (« biofilm ») par des méthodes connues en elles-mêmes de l'homme du métier. De telles méthodes peuvent être des méthodes d'observation du biofilm -notamment par microscopie par épifluorescence-, qui permettent de visualiser les micro-organismes vivants s'étendant en surface du granulat. Pour ce faire, on prélève de 1 à 10 mg de granulat de le contenant, on met en contact le granulat prélevé avec un marqueur fluorescent (notamment le 4',6'-diamidino-2 phenylindole, DAPI) de l'ADN et on observe les cellules bactérienne vivantes sous un grossissement de l'ordre de 1000 fois et par illumination en lumière bleue.

Il peut aussi s'agir de méthodes indirectes susceptibles de conférer un indice de formation du biofilm, à savoir, l'observation de l'augmentation de la rétention de formes minérales de l'azote (notamment NO₃ par dénitrification), ou l'observation de l'augmentation de la consommation d'oxygène au-delà de la vitesse de consommation de l'oxygène de l'eau dans un système de percolation d'eau en présence de bactéries libres.

Avantageusement et selon l'invention, les organismes macro-benthiques sont les organismes macro-benthiques d'une communauté d'au moins une espèce d'invertébré benthique vivant choisie dans le groupe formé des communautés d'espèce(s) d'invertébré(s) benthique(s) vivant(s) prélevées dans le lit d'un cours d'eau naturel, des communautés d'espèce(s) d'invertébré(s) benthique(s) vivant(s) prélevées dans le lit d'un cours d'eau modifié, des communautés d'espèce(s) d'invertébré(s) benthique(s) vivant(s) prélevées dans le lit d'un cours d'eau artificiel et des communautés d'espèce(s) d'invertébré(s) benthique(s) vivant(s) prélevées dans un bassin d'élevage.

Avantageusement et selon l'invention, les organismes méio-benthiques sont les organismes méio-benthiques d'une communauté d'au moins une espèce d'invertébrés benthiques vivants choisie dans le groupe formé des communautés d'espèce(s) d'invertébrés benthiques vivants prélevées dans le lit d'un cours d'eau naturel, des communautés d'espèce(s) d'invertébrés benthiques vivants prélevées dans le lit d'un cours d'eau modifié, des communautés d'espèce(s) d'invertébrés benthiques vivants prélevées dans le lit d'un cours d'eau artificiel et des communautés d'espèce(s) d'invertébrés benthiques vivants prélevées dans un bassin d'élevage.

Dans un dispositif selon l'invention, les organismes macro-benthiques et les organismes méio-benthiques sont des organismes dulçaquicoles, c'est-à-dire des organismes vivants exclusivement en eau douce. Les organismes macro-benthiques et les organismes méio-benthiques d'un dispositif selon l'invention sont des organismes prélevés dans le lit d'un cours d'eau ou dans un bassin -notamment un bassin d'élevage desdits organismes macro-benthiques et méio-benthiques- d'eau douce.

Par « communauté d'au moins une espèce », on désigne un ensemble d'espèce(s). Une telle communauté peut être constituée d'une seule espèce d'invertébré benthique vivant ou d'une pluralité d'espèces d'invertébrés benthiques vivants distinctes. Le terme « espèce » définit le taxon inférieur de la classification systématique des organismes. Les organismes d'une même espèce présentent des caractéristiques -notamment morphologiques, génétiques, de biotope et comportementales- communes de sorte que les organismes d'une même espèce sont susceptibles de se reproduire entre eux par voie sexuée.

Une telle communauté d'espèce(s) d'invertébré(s) benthique(s) vivant(s) comprend entre 1 et 200 espèce(s) d'invertébré(s) benthique(s) vivant(s), notamment plus de 5 espèces distinctes d'invertébrés benthiques vivants, en particulier plus de 30 espèces distinctes d'invertébrés benthiques vivants, préférentiellement de l'ordre de 50 espèces distinctes d'invertébrés benthiques vivants. Une telle communauté d'espèce(s) d'invertébré(s) benthique(s) vivant(s) est en particulier représentative de la biodiversité du milieu hyporhéique d'un cours d'eau.

On réalise un tel prélèvement par des méthodes connues en elles-mêmes de l'homme du métier. On utilise en particulier un dispositif -connu sous le nom de filet de surber- présentant un cadre rigide et éventuellement pliable, et un filet en tissu -notamment en polyester- de grande résistance. La taille des mailles sensiblement carrées du filet en tissu est choisie pour permettre la capture d'organismes d'une taille supérieure ou égale à la taille de maille utilisée. Par exemple, on utilise un filet de surber présentant une taille de maille de 250 µm. On réalise un prélèvement de la couche supérieure de sédiments du cours d'eau. L'épaisseur de la couche de sédiment prélevée peut varier de quelques centimètres à une dizaine de centimètres.

Avantageusement et selon l'invention, le rapport du poids sec exprimé en mg des organismes benthiques (macro-benthiques et méio-benthiques) contenus dans le contenant et du volume (en dm³) du granulat contenu dans le contenant est supérieur à 5 mg/dm³, notamment compris entre 5 mg/dm³ et 100 mg/dm³, de préférence comprise entre 10 mg/dm³ et 50 mg/dm³, en particulier de l'ordre de 20 mg/dm³. Le poids sec des organismes benthiques (macro-benthiques et méio-benthiques) correspond au poids sec de la biomasse formée des organismes benthiques et ajoutée vivante dans le dispositif d'assainissement d'eau.

Avantageusement et selon l'invention, le dispositif d'assainissement d'une eau usée comprend en outre au moins un ver oligochète choisi dans le sous-groupe formé des espèces *Limnodrilus hoffmeisteri,* de *Limnodrilus claparedeanus* et de *Tubifex tubifex.* De tels vers oligochètes sont commercialement disponibles mais peuvent aussi être prélevés dans le lit naturel d'un cours d'eau.

Avantageusement et selon l'invention, le dispositif d'assainissement d'une eau usée comprend en outre au moins un crustacé du sous-groupe des *Aselidae* -notamment de l'espèce *Asellus aquaticus-.*

Avantageusement et selon l'invention, le dispositif comprend un réservoir apte à contenir une quantité d'eau usée liquide, ledit réservoir appartenant à un circuit de circulation de ladite eau usée liquide entre ledit réservoir et l'entrée du contenant et de retour de l'eau sensiblement décontaminée entre la sortie du contenant vers l'entrée de fluide dudit contenant via le réservoir.

Avantageusement et selon l'invention, le dispositif d'assainissement comprend des moyens d'oxygénation de l'eau sensiblement décontaminée avec un fluide gazeux. Les inventeurs ont observé que l'eau sensiblement décontaminée en sortie du contenant est aussi une eau sensiblement désoxygénée, c'est à dire présentant une teneur en oxygène inférieure à la teneur en oxygène de l'eau usée avant traitement en entrée du contenant.

Avantageusement et selon l'invention, les moyens d'oxygénation de l'eau sensiblement décontaminée sont placés en sortie du contenant, notamment dans le réservoir. En particulier, on réalise une telle oxygénation de l'eau sensiblement décontaminée par bullage d'un fluide gazeux contentant de l'oxygène -notamment de l'air atmosphérique- dans le réservoir d'eau sensiblement décontaminée.

Avantageusement, les moyens d'oxygénation de l'eau sensiblement décontaminée sont formés d'un bulleur d'air apte à permettre une introduction d'oxygène dans l'eau sensiblement décontaminée et son aération de façon à maintenir une teneur minimale prédéterminée en oxygène gazeux dans l'eau sensiblement décontaminée. Les moyens d'oxygénation de l'eau sensiblement décontaminée sont adaptés pour maintenir dans ladite eau sensiblement décontaminée un taux d'oxygène correspondant à une valeur comprise entre 80% et 100% de la valeur de saturation de l'eau en oxygène. Une telle valeur de saturation de l'eau en oxygène est de l'ordre de 9 mg de O₂ /L d'eau à 20°C. Les inventeurs ont observé que le taux d'oxygène de l'eau sensiblement décontaminée en sortie du contenant est en fait inférieur à 5 mg de O₂/L d'eau, en particulier compris entre 0 et 5 mg de O₂/L d'eau. Les inventeurs ont observé que le traitement selon l'invention d'une eau usée conduit à son appauvrissement en oxygène lors de son parcours dans le contenant.

Avantageusement et selon l'invention, le dispositif d'assainissement comprend des moyens, dits moyens de mise en circulation, de prélèvement de l'eau sensiblement décontaminée -qui est aussi une eau sensiblement désoxygénée- en sortie du contenant et de réintroduction de ladite eau sensiblement décontaminée en entrée du contenant via le réservoir, dans lequel l'eau sensiblement décontaminée et désoxygénée est ré-oxygénée.

Dans un dispositif selon l'invention, il résulte une succession d'une phase aérobie (en entrée du contenant) et d'une phase anaérobie (en sortie du contenant). Les inventeurs pensent qu'une succession de phases aérobies et de phases anaérobies obtenue par oxygénation de l'eau sensiblement décontaminée et mise en circulation de ladite eau sensiblement décontaminée et oxygénée permet d'améliorer l'efficacité de traitement de décontamination. Les inventeurs pensent que les micro-organismes aérobies du biofilm répartis à proximité de l'entrée de fluide du contenant sont à l'origine des étapes aérobies de dégradation des contaminants de l'eau usée et que les micro-organismes anaérobies du biofilm répartis à proximité de la sortie de fluide du contenant sont à l'origine des étapes anaérobies de dégradation des contaminants de l'eau usée.

Les inventeurs pensent que la combinaison du granulat, du biofilm, des organismes macro-benthiques et des organismes méio-benthiques -en particulier de la communauté d'espèce(s) d'organismes invertébrés benthiques comprenant une proportion d'organismes invertébrés détritivores comprise entre 60% et 80%- permet la formation et le maintien :
- de zones aérobies riches en oxygène et permettant le développement de microorganismes aérobies et ;
- de zones anaérobies pauvres en oxygène, voir sensiblement anoxiques et permettant le développement de microorganismes anaérobies facultatifs ou stricts ;
et que la succession de telles zones aérobies et de telles zones sensiblement anaérobies traversées par le flux de l'eau usée dans le dispositif d'assainissement selon l'invention permet de dégrader les contaminants de l'eau usée.

Avantageusement, dans une première variante d'un dispositif selon l'invention, le contenant présente une forme sensiblement cylindrique de révolution d'axe de révolution sensiblement vertical et présentant une première ouverture supérieure comprenant l'entrée de l'eau usée liquide et une deuxième ouverture inférieure comprenant la sortie de l'eau sensiblement décontaminée.

Dans cette première variante, le contenant du dispositif d'assainissement d'une eau usée liquide est une colonne de filtration d'eau présentant une entrée de l'eau usée liquide s'étendant dans la partie supérieure de ladite colonne de filtration et une sortie d'eau sensiblement décontaminée s'étendant en deçà de ladite entrée d'eau usée liquide et dans la partie inférieure de ladite colonne de filtration. La colonne de filtration peut présenter tout diamètre et toute longueur qui soit adaptée pour recevoir le granulat et pour permettre un écoulement de l'eau usée liquide entre l'entrée et la sortie de fluide de ladite colonne de filtration.

A titre d'exemple non limitatif d'une variante d'un dispositif selon l'invention formé d'une colonne de filtration, les particules solides du granulat sont réparties à l'intérieur du contenant sous la forme d'une superposition de couches de particules solides, chaque couche de particules solides s'étendant en surface d'une couche de particules solides inférieure, sur une épaisseur comprise entre 2 cm et 4 cm et selon une direction sensiblement perpendiculaire au flux moyen d'eau dans ladite colonne de filtration. Chacune des couches successives de la superposition de couches de particules solides présente une granulométrie distincte de la granulométrie des deux couches immédiatement contigües. Dans cet exemple, un dispositif selon l'invention comprend un granulat retenu à l'intérieur du contenant, ledit granulat étant formé d'une succession de couches de particules solides, chacune des couches de particules solides étant choisies dans le groupe formé des particules solides présentant une granulométrie moyenne comprise entre 5 mm et 20 mm -notamment de l'ordre de 15 mm et dénommées « graviers »-, des particules solides présentant une granulométrie moyenne comprise entre 0,3 mm et 0,6 mm -notamment de l'ordre de 0,5 mm- dénommées « grain de riz » et des particules solides présentant une granulométrie moyenne comprise entre 0,05 mm et 0,5 mm -notamment de sable-. En outre, dans cette variante d'un dispositif selon l'invention, la couche inférieure du granulat est formée d'une couche de gravier telle que définie ci-dessus et s'étendant sur une épaisseur de l'ordre de 15 mm.

Avantageusement, le granulat présente une distribution de tailles des particules solides qui est sensiblement homogène dans le contenant. Par distribution de taille sensiblement homogène, on entend que les particules solides ne se répartissent pas dans le contenant selon un gradient de taille dans lequel les particules solides de plus grande taille formeraient une couche inférieure du granulat dans le contenant, les particules solides de taille intermédiaire formeraient une couche intermédiaire du granulat dans le contenant et les particules solides de plus petite taille formeraient une couche supérieure du granulat dans le contenant.

Avantageusement dans une deuxième variante d'un dispositif selon l'invention, le contenant est un bassin configuré pour permettre un approvisionnement dudit bassin en eau usée liquide, une circulation de l'eau usée liquide au contact du granulat du bassin et une sortie de l'eau sensiblement décontaminée.

Le bassin d'assainissement d'une eau usée liquide peut présenter toutes les formes et toutes les dimensions -notamment tout diamètre-possibles et qui soit adaptées pour recevoir le granulat et pour permettre un écoulement de l'eau usée liquide entre l'entrée et la sortie de fluide dudit bassin d'assainissement d'une eau usée.

L'invention s'étend par ailleurs à un procédé de traitement d'une eau usée liquide en vue de sa décontamination dans lequel :
- on choisit un granulat formé de particules solides, puis ;
- on place ledit granulat à l'intérieur d'un contenant adapté pour pouvoir maintenir un contact entre ledit granulat et un flux d'une eau de percolation liquide s'écoulant dans ledit contenant, puis ;
- on forme un flux de l'eau de percolation liquide au contact du granulat, entre :
   ∘ une entrée d'eau liquide du contenant, et ;
   ∘ une sortie d'eau liquide du contenant ;
   et on maintient ledit flux pendant une durée déterminée et des conditions adaptées pour permettre un établissement d'une communauté, dite communauté de micro-organismes, d'au moins une espèce de micro-organisme(s) -notamment sous forme d'un biofilm- en surface et au contact des particules minérales du granulat et former une matrice adaptée au développement de ladite communauté de micro-organismes, puis ;
- on choisit :
   ∘ au moins un invertébré benthique vivant dans le groupe formé des invertébrés benthiques vivants, dits organismes macro-benthiques, présentant une taille moyenne supérieure à 250 µm et on répartit le(s)dit(s) organisme(s) macro-benthique(s) dans le granulat ;
   ∘ au moins un invertébré benthique vivant dans le groupe formé des invertébrés benthiques vivants, dits organismes méio-benthiques, présentant une taille moyenne comprise entre 50 µm et 250 µm et on répartit le(s)dit(s) organisme(s) méio-benthique(s) dans le granulat,
   les organismes macro-benthiques et les organismes méio-benthiques formant une communauté d'espèce(s) d'organismes invertébrés benthiques comprenant une proportion d'organismes invertébrés détritivores, exprimée en pourcentage du poids sec des organismes invertébrés détritivores et du poids sec des organismes benthiques de ladite communauté d'espèce(s), comprise entre 60% et 80% -notamment de l'ordre de 75%-, puis ;
- on introduit dans le contenant un flux de l'eau usée liquide de façon à permettre sa décontamination et la formation d'un flux d'eau sensiblement décontaminée -et présentant une teneur en oxygène diminuée par rapport à l'eau usée liquide- en sortie d'eau liquide du contenant.

Avantageusement, l'eau de percolation comprend un taux de carbone (C) d'une matière organique compris entre 10 mg et 20 mg/L d'eau de percolation -notamment de l'ordre de 15 mg/L d'eau de percolation-.

Avantageusement, l'eau de percolation comprend un taux d'azote (N) d'une matière organique compris entre 5 mg et 15 mg/L d'eau de percolation -notamment de l'ordre de 10 mg/L d'eau de percolation-.

Avantageusement, on prélève les invertébrés benthiques vivants (organismes macro-benthiques et organismes méio-benthiques) par filtration de l'eau s'écoulant au contact des sédiments du lit naturel d'un cours d'eau ou par mise en suspension des sédiments formant la couche superficielle -notamment s'étendant sur une épaisseur de l'ordre de 15 cm-, prélèvement et filtration dans un filet du type « Surber ».

Avantageusement et selon l'invention, on prélève la communauté d'espèce(s) d'organismes invertébrés benthiques vivants par filtration dans un sédiment choisi dans le groupe formé des sédiments du lit d'un cours d'eau naturel, des sédiments du lit d'un cours d'eau modifié, des sédiments du lit d'un cours d'eau artificiel et des sédiments d'un bassin d'élevage -notamment dans un bassin d'élevage desdits invertébrés benthiques vivants-.

Dans une variante avantageuse d'un procédé selon l'invention, on prélève la communauté d'espèce(s) d'organismes invertébrés benthiques vivants par filtration dans les sédiments constituant le lit d'un cours d'eau artificiel, notamment dans les sédiments constituant le lit d'un cours d'eau ou d'un bassin artificiel d'élevage de ladite communauté d'espèce(s) d'organismes invertébrés benthiques vivants. Dans une telle variante d'un procédé selon l'invention, on évite ainsi un épuisement de la faune macro-benthique et de la faune méio-benthique d'un cours d'eau naturel.

Avantageusement et selon l'invention, on ajoute les organismes macro-benthiques et les organismes méio-benthiques simultanément dans le contenant retenant le granulat de façon que le rapport du poids sec des organismes méio-benthiques et du poids sec des organismes benthiques (macro-benthiques et méio-benthiques) soit compris entre 5% et 10%.

Avantageusement un procédé selon l'invention est adapté pour pouvoir permettre un traitement préventif du colmatage du dispositif d'assainissement d'une eau usée liquide.

Avantageusement et selon l'invention, on recycle l'eau sensiblement décontaminée en sortie d'eau du contenant et on introduit ladite l'eau sensiblement décontaminée en entrée d'eau dudit contenant.

L'invention vise en outre un tel procédé en vue de diminuer le taux d'azote d'une eau contaminée.

L'invention vise en outre un tel procédé en vue de diminuer le taux d'agent phytosanitaire d'une eau contaminée.

L'invention vise aussi l'utilisation d'un dispositif selon l'invention en vue de diminuer le taux d'azote -notamment de nitrate, de nitrite et d'ammoniaque- d'une eau contaminée.

L'invention vise aussi l'utilisation d'un dispositif selon l'invention en vue de diminuer le taux d'agent(s) phytosanitaire(s) -notamment d'un agent biocide- d'une eau contaminée.

L'invention concerne également un dispositif, un procédé d'assainissement d'une eau usée et l'utilisation d'un tel dispositif caractérisés en combinaison par tout ou partie des caractéristiques mentionnées ci-dessus ou ci-après.

D'autres buts, caractéristiques et avantages de l'invention apparaîtront à la lecture des exemples de la description suivante donnés uniquement à titre d'exemples non limitatifs.

EXEMPLE 1 - Procédé de traitement d'une eau polluée riche en nitrates.

Dans une colonne de filtration en Plexiglas de section transversale circulaire et de 7 cm de diamètre et d'une hauteur de 20 cm, on dispose par superposition des couches successives de matériaux solides à l'état divisé, la couche (L₁) inférieure présentant une granulométrie moyenne comprise entre 0,5 mm et 1,0 mm, la couche (L₂) immédiatement supérieure à la couche (L₁) présentant une granulométrie moyenne comprise entre 1,0 mm et 2,0 mm, la couche (L₃) immédiatement supérieure à la couche (L₂) présentant une granulométrie moyenne comprise entre 2,0 mm et 10,0 mm, la couche (L₄) immédiatement supérieure à la couche (L₃) présentant une granulométrie moyenne comprise entre 10,0 mm et 20,0 mm. L'épaisseur de chacune des couches successives de matériaux solides à l'état divisé est de l'ordre de 4 cm. On obtient de tels matériaux solides à l'état divisé par tamisage d'un mélange sable/gravier sur des tamis calibrés. On place à l'extrémité inférieure de la colonne de filtration contenant le granulat un film poreux de taille moyenne de pores de l'ordre de 300 µm et on maintient à l'extrémité supérieure de la colonne de filtration contenant le granulat une épaisseur d'eau de rivière (Garonne, France) d'une épaisseur de l'ordre de 2 cm. La porosité moyenne du granulat dans le dispositif d'assainissement est de l'ordre de 30%.

Le dispositif d'assainissement est alimenté en eau de rivière (Garonne, France) à partir d'un réservoir en HDPE d'un volume de 15 L au moyen d'une pompe péristaltique (323Du, Watson-Marlow) connectée par un tube en silicone opaque (de diamètre de 3,2 mm) à une entrée de fluide du dispositif d'assainissement située à l'extrémité supérieure de ladite colonne de filtration. Le débit de l'eau de rivière dans le dispositif d'assainissement est de l'ordre de 7 à 8 mL/min. Un tel débit est représentatif du flux d'eau dans les sédiments hyporhéiques (vitesse de Darcy de 1,39 à 1,59 m/jour). La sortie du contenant est mise en communication de fluide avec le réservoir au moyen d'un tuyau adapté pour permettre un retour de l'eau sensiblement décontaminée sortant du contenant vers l'entrée de fluide dudit contenant via le réservoir.

Le réservoir d'eau de rivière est en outre équipé d'un dispositif d'oxygénation de ladite eau de rivière. La concentration en oxygène de l'eau de rivière dans le réservoir est de l'ordre de 9,0 mg/L et est maintenue constante par bullage permanent d'air dans le réservoir.

L'ensemble du dispositif de traitement d'une eau contaminée liquide est placé à l'obscurité et à une température de l'ordre de 15°C de façon à limiter le développement d'une communauté de micro-organismes autotrophes en surface des particules solides du granulat et la formation d'un « biofilm » autotrophe.

Dans un procédé d'assainissement d'une eau polluée par des nitrates, on mesure le taux de nitrate de l'eau de rivière polluée avant l'addition des organismes invertébrés benthiques (pendant une durée de 7 jours) et après l'addition des organismes invertébrés benthiques (pendant une durée de 7 jours). On calcule de cette façon le taux de disparition (exprimé en mg de nitrate prélevé par jour et par gramme de matière organique) des nitrates de l'eau de rivière polluée avant et après addition de la communauté d'espèce(s) d'invertébré benthique vivant.

Dans un premier dispositif (D₁) de contrôle expérimental (C₁), on réalise une étape de stérilisation de la suspension du granulat dans l'eau de rivière (Garonne, France) avant son introduction dans le dispositif de filtration. On réalise ainsi un dispositif (D₁) qui est sensiblement exempt de « biofilm ».

Dans un deuxième dispositif (D₂) de contrôle expérimental (C₂) exempt d'organismes invertébrés benthiques, on forme une circulation de l'eau de rivière à travers le granulat pendant une durée de l'ordre de 40 jours de façon à permettre la formation d'un « biofilm » en surface des particules solides du granulat. On mesure le taux de nitrate de l'eau de rivière polluée sur une première période de 7 jours (J 40 à J 47) et sur une deuxième période de 7 jours (J 48 à J 56). On calcule de cette façon le taux de prélèvement (exprimé en mg de nitrate prélevé par jour et par gramme de matière organique) des nitrates de l'eau de rivière polluée sur les première et deuxième périodes par le « biofilm » seul.

Dans un troisième dispositif (D₃) d'une troisième condition expérimentale (C₃), on forme d'abord une circulation de l'eau de rivière à travers le granulat pendant une durée de l'ordre de 40 jours de façon à permettre la formation d'un « biofilm » en surface des particules solides du granulat, puis on ajoute en tête du dispositif d'assainissement une communauté d'espèce(s) d'invertébré benthique vivant, formant une méiofaune, prélevés dans un affluent de l'Ariège (la Lèze, Haute-Garonne, France, lieu-dit de « La Fagette »), lesdits organismes invertébrés benthiques vivants présentant une taille moyenne comprise entre 50 µm et 250 µm.

La composition de la méiofaune introduite dans le dispositif d'assainissement (C₃) est donnée dans le tableau 1 ci-après.

**Tableau 1**

| Organisme | Nombre d'organismes |
|---|---|
| Lecane | 810 |
| Lepadella | 42 |
| Cephalodella & Dicranophorus | 292 |
| Notholca | 2 |
| Keratella & Cochlearis | 20 |
| Bdelloida | 457 |
| Nématodes | 38 |
| Oligochètes | 3 |
| Embranchement des Tardigrades | 15 |
| Cyclopoida | 7 |
| Harpacticoida | 4 |
| Nauplius | 13 |
| Coléoptères | 1 |
| Chironomidae | 2 |
| Ephemeroptera | 1 |
| Hydracarina | 3 |
| Total en nombre d'organismes | 1710 |

On mesure le taux de nitrate de l'eau de rivière polluée sur une première période de 7 jours (J 40 à J 47) avant l'addition de la méiofaune, et sur une deuxième période de 7 jours (J 48 à J 56) après l'addition de la méiofaune. On calcule de cette façon le taux de prélèvement (exprimé en mg de nitrate prélevé par jour et par gramme de matière organique) des nitrates de l'eau de rivière polluée sur les première et deuxième périodes par le « biofilm » seul d'une part et par le « biofilm » en présence de la communauté d'espèce(s) d'invertébré benthique vivant du type méiofaune.

Dans un quatrième dispositif (D₄) d'une quatrième condition expérimentale (C₄), on forme d'abord une circulation de l'eau de rivière à travers le granulat pendant une durée de l'ordre de 40 jours de façon à permettre la formation d'un « biofilm » en surface des particules solides du granulat, puis on ajoute en tête du dispositif d'assainissement la communauté d'espèce(s) d'invertébré benthique vivant formant la méiofaune, et une communauté d'invertébré benthique vivant, formant une macrofaune, prélevés dans un affluent de l'Ariège (la Lèze, Haute-Garonne, France, lieu-dit de « La Fagette »), lesdits organismes invertébrés benthiques présentant une taille moyenne supérieure à 250 µm.

La composition de la macrofaune introduite dans le dispositif d'assainissement (C₄) est donnée dans le tableau 2 ci-après.

**Tableau 2**

| Organisme | Nombre d'organisme |
|---|---|
| Nématodes | 2 |
| Oligochètes | 48 |
| Hydracarina | 47 |
| Elmis | 1 |
| Esolus | 24 |
| Limnius | 4 |
| Ouliminus | 6 |
| Macronychus | 2 |
| Ceratopogonidae | 4 |
| Chironominii | 1 |
| Tanytarsinii | 2 |
| Orthocladinae | 7 |
| Tanyponidae | 37 |
| Hemerodromiinae | 2 |
| Tipuloidae | 1 |
| Cyclopidae | 9 |
| Indéterminés | 14 |
| Total en nombre d'organismes | 211 |

La masse sèche de la macrofaune introduite dans le dispositif d'assainissement (C₄) est de 7,61 mg. La masse sèche de la macrofaune introduite dans le dispositif d'assainissement (C₄) par gramme de granulat est de 1,24 µg/g.

On mesure le taux de nitrate de l'eau de rivière polluée sur une première période de 7 jours (J 40 à J 47) avant l'addition de la macrofaune, et sur une deuxième période de 7 jours (J 48 à J 56) après l'addition de la macrofaune. On calcule de cette façon la vitesse (Vₚ[NO₃]) de prélèvement (exprimée en mg de nitrate prélevé par jour et par gramme de matière organique, mg.j⁻¹.g⁻¹) des nitrates de l'eau de rivière polluée sur les première et deuxième périodes par le granulat (C₁) seul sans « biofilm », par le « biofilm » déposé sur granulat (C₂), par le « biofilm » en présence de la communauté d'espèce(s) d'invertébré benthique vivant du type méiofaune (C₃) et par le « biofilm » en présence de la communauté d'espèce(s) d'organismes invertébrés benthiques de type méiofaune et macrofaune (C₄).

Les valeurs moyennes (+/- écart-type) estimées sur au moins 3 contenants en réplique de la vitesse (Vᵣ[NO₃]) de rétention des nitrates (en mg par jour et par gramme de granulat sont données au tableau 3 ci-après dans les conditions C₁, C₂, C₃ et C₄ décrites ci-dessus avant introduction (A) de la communauté d'espèce(s) d'invertébré benthique vivant dans le dispositif d'assainissement et après introduction (B) de la communauté d'espèce(s) d'organismes invertébrés benthiques dans le dispositif d'assainissement.

**Tableau 3**

| | Avant introduction (J 40 à J 47) | | | Après introduction (J 48 à J 56) | | | |
|---|---|---|---|---|---|---|---|
| | C₂ | C₃ | C₄ | C₁ | C₂ | C₃ | C₄ |
| Vₚ[NO₃] +/- ET | 13,4+/-7,8 | 11,8+/-4,5 | 14,3+/- 10,8 | 5,7+/- 2,9 | 16,1+/- 5,8 | 30,0+/- 8,5 | 49,4+/- 13,9 |

On analyse la concentration en nitrates selon une méthode de chromatographie d'ion à haute performance. Les échantillons sont prélevés dans le réservoir et filtrés sur un filtre à membrane de cellulose présentant une porosité de 0,22 µm (VWR, Fontenay-sous-bois, France).

On détermine le contenu des dispositifs d'assainissement en matière organique par différence (AFDM, « Ash Free Dry Mass ») entre la masse d'un échantillon de granulat prélevé dans un dispositif d'assainissement et séché pendant 48 h à 105°C et la masse de cet échantillon séché puis traité par pyrolyse à 500°C pendant 5 h et dans lequel la matière organique est convertie en cendres. La quantité de matière organique de chacun des dispositifs (D₁), (D₂), (D₃) et (D₄) présente un taux de matière organique de l'ordre de 6,0 +/- 0,9 mg de matière organique par gramme de granulat. Une telle quantité de matière organique correspond à un pourcentage massique de carbone par rapport au granulat de l'ordre de 0,6 +/- 0,1%. A titre d'exemple, la quantité de matière organique issue de la macrofaune dans la condition (C₄) est de 1,21 mg de matière organique par gramme de granulat, correspondant à un pourcentage massique de carbone de la macrofaune par rapport au carbone de la matière organique totale de l'ordre de 0,02%.

EXEMPLE 2 - Procédé de traitement d'une eau polluée par le diuron (N'-(3,4-dichlorophényle)-N, N-diméthyle-urée, CAS 330-54-1).

Le diuron (Sigma-Aldrich, Saint Quentin Fallavier, France) est un désherbant de la famille des phénylurées détecté dans le fleuve Garonne à une concentration de l'ordre de 0,2 µg/L en moyenne annuelle. La toxicité du diuron est avérée pour de nombreux organismes aquatiques et en particulier pour les larves des amphibiens, notamment des larves de Xénope. On prépare une solution de diuron dans du diméthylesulfoxyde (DMSO) à la concentration de 64 mg/mL et on ajoute dans le réservoir le volume de cette solution adapté pour obtenir une concentration finale en diuron dans l'eau du réservoir de 30 µg/L.

Dans cet exemple, on analyse la présence résiduelle du diuron dans l'eau décontaminée en sortie d'un dispositif d'assainissement d'une eau usée liquide selon l'invention par l'analyse de la toxicité de l'eau décontaminée prélevée en sortie du dispositif d'assainissement. En particulier, on analyse cette toxicité vis-à-vis du développement de larves de Xénope entre les stades 50 et 54 jours.

Le dispositif d'assainissement d'eau usée comprend une colonne de filtration en PVC de section transversale circulaire et de 7 cm de diamètre et d'une hauteur de 20 cm (volume total de 770 cm³). Dans cette colonne de filtration, on dispose des couches successives de matériaux solides à l'état divisé, la couche (L₁) inférieure de gravier présentant une granulométrie moyenne comprise entre 5 mm et 15 mm, la couche (L₂) de gravier immédiatement supérieure à la couche (L₁) présentant une granulométrie moyenne de l'ordre de 0,5 mm, la couche (L₃) de sable, immédiatement supérieure à la couche (L₂), la couche (L₄) de gravier immédiatement supérieure à la couche (L₃) présentant une granulométrie moyenne de l'ordre de 0,5 mm et la couche (L₅) de sable, immédiatement supérieure à la couche (L₄) et adaptée pour permettre l'enfouissement d'organismes invertébrés benthiques apportés dans le dispositif d'assainissement. L'épaisseur de chacune des couches successives de matériaux solides à l'état divisé est de l'ordre de 2,5 cm.

On obtient de tels matériaux solides à l'état divisé par tamisage d'un mélange sable/gravier sur des tamis calibrés. On place à l'extrémité inférieure de la colonne de filtration contenant le granulat de particules solides un film poreux de porosité de l'ordre de 300 µm et on maintient à l'extrémité supérieure de ladite colonne de filtration contenant le granulat une épaisseur d'eau de rivière (Garonne, France) d'une épaisseur de l'ordre de 2 cm.

Le dispositif d'assainissement est alimenté en eau de rivière (Garonne, France) à partir d'un réservoir d'un volume de 100 L au moyen d'une pompe péristaltique (323Du, Watson-Marlow) connectée par un tube en silicone opaque (de diamètre de 3,2 mm) à une entrée de fluide du dispositif d'assainissement située à l'extrémité supérieure de ladite colonne de filtration d'eau. Le réservoir d'eau de rivière est en outre équipé d'un dispositif d'oxygénation de ladite eau de rivière. La concentration en oxygène de l'eau de rivière dans le réservoir est maintenue constante par bullage permanent d'air dans le réservoir. La température moyenne de l'eau est de l'ordre de 17°C.

Dans un procédé d'assainissement d'une eau contaminée selon l'invention, on réalise une circulation de l'eau de rivière -enrichie en azote (KNO₃) et en carbone (acétate de sodium) par addition régulière de nutriments-dans le dispositif d'assainissement pendant une durée de l'ordre de 48 jours de façon à permettre la formation du « biofilm » en surface du granulat.

On ajoute ensuite (J 49) dans le dispositif d'assainissement une communauté d'espèce(s) d'invertébré benthique vivant. On introduit (J 60) dans l'eau de rivière une quantité de diuron (8 mg/L) et on poursuit la circulation de l'eau de rivière contaminée par le diuron et enrichie en KNO₃ et en acétate de sodium dans le dispositif de décontamination. On réalise des prélèvements quotidiens d'eau de rivière en sortie de chaque dispositif d'assainissement.

Dans un premier dispositif (D₅) d'assainissement mis en oeuvre dans une condition (C₅) d'un procédé de traitement d'une eau contaminée selon l'invention, on ajoute, au titre de communauté d'espèce(s) d'invertébrés benthiques vivants, une macrofaune et une méiofaune telle que décrite à l'exemple 1.

Dans un deuxième dispositif (D₆) d'assainissement mis en oeuvre dans une condition (C₆) d'un procédé de traitement d'une eau contaminée selon l'invention, on ajoute au titre de communauté d'espèce(s) d'invertébré benthique vivant uniquement une méiofaune telle que décrite à l'exemple 1.

Dans un troisième dispositif (D₇) de contrôle d'un dispositif d'assainissement (D₅ et D₆) selon l'invention, on réalise la même séquence que (C₅, C₆) mais sans addition d'une communauté d'espèce(s) d'invertébré benthique vivant (C₇).

Les résultats de toxicité de l'eau prélevée en sortie des dispositifs D₅, D₆ et D₇ d'assainissement d'eau selon l'invention après 18 jours de circulation de ladite eau dans le dispositif d'assainissement sont exprimés au tableau 4 ci-après par la mortalité de larves de Xénope exposées à une eau obtenue après 18 jours de traitement dans le dispositif.

**Tableau 4**

| | C₅ | C₆ | | C₇ | | |
|---|---|---|---|---|---|---|
| Diuron initial, µg/L | 30 | 30 | 15 | 30 | 15 | 7,5 |
| Mortalité, % | 7 | 100 | 29 | 100 | 100 | 15 |

La condition C₅ (méiofaune et macrofaune) permet la dépollution d'une eau de rivière contaminée au diuron et la production d'une eau de rivière de toxicité réduite (mortalité 7%).

EXEMPLE 3 - Essai comparatif d'un dispositif selon l'invention et d'un dispositif comprenant des vers oligochètes.

On réalise un dispositif d'assainissement (D₈) d'une eau usée selon l'invention tel que décrit à l'exemple 2 et pour lequel on prépare, par prélèvement dans un cours d'eau (Lèze, Haute-Garonne, France) au moyen d'un tamis de maille égale à 500 µm, une communauté d'espèce(s) d'invertébré benthique vivant dont la composition est donnée au tableau 5 ci-après.

**Tableau 5**

| Organisme | Nombre d'individus |
|---|---|
| Elmidae | 26 |
| Dryopidae | 1 |
| Chrysomelidae | 2 |
| Chironomidae | 91 |
| Tabanidae | 11 |
| Empididae | 7 |
| Athericidae | 2 |
| Ceratopogonidae | 6 |
| Psychomyidae | 1 |
| Ecnomidae | 7 |
| Hydracariens | 4 |
| Baetidae | 1 |
| Total | 159 |

La masse (poids sec) moyenne de la communauté d'espèce(s) d'organismes invertébrés macro-benthiques vivants ajoutée dans le dispositif d'assainissement (D₈) est de 25 +/-4 milligrammes.

La masse (poids sec) moyenne de la communauté d'espèce(s) d'organismes invertébrés méio-benthiques vivants ajoutée dans le dispositif d'assainissement (D₈) est de 1 +/-3 milligrammes.

On réalise en parallèle un dispositif (D₉) comparatif dans lequel la communauté d'espèce(s) d'invertébré benthique vivant est substituée par des vers oligochètes de l'espèce *Tubifex tubifex.* La masse de vers *Tubifex tubifex* est de l'ordre de 500 mg (poids frais) par dispositif d'assainissement et est représentative de la densité moyenne de ces vers oligochètes dans le milieu naturel (56 000 vers oligochètes/m² de rivière).

On réalise en parallèle, un dispositif (D₁₀) contrôle dans lequel aucun organisme benthique n'est introduit.

Dans les dispositifs (D₈, D₉ et D₁₀) d'assainissement d'une eau usée, on réalise une circulation de l'eau de rivière (Garonne, France) pendant toute la durée de l'expérience (73 jours) de façon à permettre la formation du « biofilm » en surface des particules solides du granulat. Pendant les 62 premiers jours de circulation de ladite eau de rivière (exempte de diuron) dans les dispositifs (D₈, D₉ et D₁₀) d'assainissement, on ajoute dans le réservoir une quantité d'acétate de sodium de façon à maintenir la concentration en acétate de sodium dans le réservoir à une valeur de l'ordre de 30 mg de carbone/L et une quantité de nitrate de potassium de façon à maintenir la concentration en nitrate de potassium dans le réservoir à une valeur de l'ordre de 50 mg de nitrate par litre.

Au 49^{ème} jour de circulation de l'eau de rivière complémentée en nutriments, on introduit dans la colonne de filtration des dispositifs d'assainissement (D₈ et D₉) respectivement une communauté d'espèce(s) d'invertébré benthique vivant (D₈) et une quantité de vers oligochètes *-Tubifex tubifex-* (D₉).

On procède à l'addition du diuron dans le réservoir des trois dispositifs (D₈, D₉ et D₁₀). Après 10 jours de circulation de l'eau dans le dispositif d'assainissement, on analyse la toxicité de l'eau du réservoir de chacun des trois dispositifs (D₈, D₉ et D₁₀) par exposition de larves de Xénope à l'eau du réservoir de chacun des dispositifs (D₈, D₉ et D₁₀). On réalise en outre les contrôles suivants :
- exposition de larves de Xénope à une eau de rivière non traitée dans un dispositif d'assainissement d'une eau usée (contrôle négatif T(-)) ;
- exposition de larves de Xénope à une eau de rivière contenant 286 µL de DMSO à titre de solvant du diuron (contrôle T_{DMSO}) ;
- exposition de larves de Xénope à une eau de rivière contenant un composé génotoxique, le cyclophosphamide, à une concentration de 20 mg/L (contrôle positif T(+)) ;
- exposition de larves de Xénope à l'eau du réservoir d'un dispositif (D₁₁) d'assainissement d'eau sans « biofilm » ni communauté d'espèce(s) d'invertébré benthique vivant ;
- exposition de larves de Xénope à l'eau du réservoir d'un dispositif (D₁₀) d'assainissement d'eau avec «biofilm» mais sans communauté d'espèce(s) d'invertébré benthique vivant ;
- exposition de larves de Xénope à l'eau du réservoir d'un dispositif (D₉) d'assainissement d'eau avec « biofilm » et vers oligochètes ;
- exposition de larves de Xénope à l'eau du réservoir d'un dispositif (D₈) d'assainissement d'eau avec « biofilm » et communauté d'espèce(s) d'invertébré benthique vivant.

La toxicité aigüe de l'eau assainie est mesurée en incubant des larves de Xénope, choisies à un stade de développement de 50 à 54 jours, pendant une durée de 12 jours avec ladite eau assainie sur des larves. Une telle mesure permet d'observer les signes d'intoxication des larves induite par l'exposition de l'eau obtenue en sortie du dispositif d'assainissement en fin de traitement. Les résultats sont donnés au tableau 6 ci-après.

**Tableau 6**

| Toxicité | T(-) | T_{DMSO} | T(+) | D₁₁ | D₁₀ | D₉ | D₈ |
|---|---|---|---|---|---|---|---|
| de 1 à 5 jours | Absence de toxicité | Absence de toxicité | Toxicité létale | Toxicité létale | Toxicité létale | Toxicité létale | Faible toxicité |
| de 5 à 12 jours | Absence de toxicité | Absence de toxicité | Toxicité létale | Toxicité létale | Toxicité létale | Toxicité létale | Croissance ralentie et stoppée |

Des résultats de génotoxicité, mesurés selon la norme ISO 21427-1 (Novembre 2006, Qualité de l'eau - Évaluation de la génotoxicité par la mesure de l'induction de micronoyaux - Partie I : Évaluation de la génotoxicité à l'aide de larves d'amphibiens) indiquent une génotoxicité avérée dans le témoin positif T(+) et significativement supérieure à celle du témoin négatif T(-) et à celle de l'eau assainie obtenue selon un procédé selon l'invention (D₈).

La présence de la communauté d'espèce(s) d'invertébrés benthiques vivants décrite au tableau 5 dans le dispositif (D₈) d'assainissement d'une eau usée permet la production d'une eau décontaminée présentant une toxicité réduite sur les larves de Xénope, en comparaison avec l'eau obtenue avec un dispositif (D₉) comprenant uniquement des vers oligochètes.

## Revendications

1. Dispositif (1) d'assainissement d'une eau usée liquide, comprenant :
- un contenant (2) adapté pour retenir un granulat (3) formé de particules solides et pour permettre un contact entre les particules solides du granulat (3) et ladite eau usée liquide s'écoulant dans ledit contenant (2) entre :
∘ une entrée (4) de ladite eau usée liquide dans ledit contenant, et ;
∘ une sortie (5) d'une eau sensiblement décontaminée du contenant (2) ;
- une communauté, dite communauté de micro-organismes, d'au moins une espèce de micro-organisme s'étendant en surface et au contact des particules solides du granulat (3) et formant une matrice adaptée au développement de ladite communauté de micro-organismes ;
- au moins un invertébré benthique vivant choisi dans le groupe formé des invertébrés benthiques vivants, dits organismes macro-benthiques, présentant une taille moyenne supérieure à 250 µm, le(s)dit(s) organisme(s) macro-benthique(s) étant réparti(s) dans le granulat (3) ;
- au moins un invertébré benthique vivant, choisi dans le groupe formé des invertébrés benthiques vivants, dits organismes méio-benthiques, présentant une taille moyenne comprise entre 50 µm et 250 µm, le(s)dit(s) organisme(s) méio-benthique(s) étant réparti(s) dans le granulat (3) **caractérisé en ce que** les organismes macro-benthiques et les organismes méio-benthiques forment une communauté d'espèce(s) d'organismes invertébrés benthiques comprenant une proportion d'organismes invertébrés détritivores, exprimée en pourcentage du poids sec des organismes invertébrés détritivores et du poids sec des organismes invertébrés benthiques de ladite communauté d'espèce(s), comprise entre 60% et 80%.

2. Dispositif (1) selon la revendication 1, **caractérisé en ce que** le granulat (3) présente une porosité moyenne dans le contenant (2) comprise entre 20% et 40%.

3. Dispositif selon l'une des revendications 1 ou 2, **caractérisé en ce que** les organismes macro-benthiques sont choisis dans le groupe formé des organismes de l'embranchement des achètes, des organismes de l'embranchement des oligochètes, des organismes de l'embranchement des arthropodes et des organismes de l'embranchement des mollusques.

4. Dispositif (1) selon l'une des revendications 1 à 3, **caractérisé en ce que** les organismes méio-benthiques sont choisis dans le groupe formé des organismes de l'embranchement des némathelminthes, des organismes de l'embranchement des cladocères, des organismes de l'embranchement des rotifères, des organismes de l'embranchement des copépodes, des organismes de l'embranchement des gastrotriches et des organismes de l'embranchement des foraminifères et des organismes de l'embranchement des tardigrades.

5. Dispositif (1) selon l'une des revendications 1 à 4, **caractérisé en ce que** la communauté de micro-organismes comprend des micro-organismes unicellulaires choisis dans le groupe formé des bactéries, des algues, des champignons et des protozoaires.

6. Dispositif (1) selon l'une des revendications 1 à 5, **caractérisé en ce que** les organismes macro-benthiques sont les organismes macro-benthique d'une communauté d'au moins une espèce d'invertébré benthique vivant choisie dans le groupe formé des communautés d'espèce(s) d'invertébré(s) benthique(s) vivant(s) prélevées dans le lit d'un cours d'eau naturel, des communautés d'espèce(s) d'invertébré(s) benthique(s) vivant(s) prélevées dans le lit d'un cours d'eau modifié, des communautés d'espèce(s) d'invertébré(s) benthique(s) vivant(s) prélevées dans le lit d'un cours d'eau artificiel et des communautés d'espèce(s) d'invertébré(s) benthique(s) vivant(s) prélevées dans un bassin d'élevage.

7. Dispositif (1) selon l'une des revendications 1 à 6, **caractérisé en ce que** les organismes méio-benthiques sont les organismes méio-benthiques d'une communauté d'au moins une espèce d'invertébré benthique vivant choisie dans le groupe formé des communautés d'espèce(s) d'invertébré(s) benthique(s) vivant(s) prélevées dans le lit d'un cours d'eau naturel, des communautés d'espèce(s) d'invertébré(s) benthique(s) vivant(s) prélevées dans le lit d'un cours d'eau modifié, des communautés d'espèce(s) d'invertébré(s) benthique(s) vivant(s) prélevées dans le lit d'un cours d'eau artificiel et des communautés d'espèce(s) d'invertébrés benthiques vivants prélevées dans un bassin d'élevage.

8. Dispositif (1) selon l'une des revendications 1 à 7, **caractérisé en ce que** le rapport du poids sec exprimé en mg des organismes invertébrés benthiques vivants contenus dans le contenant (2) et du volume (en dm³) du granulat (3) contenu dans le contenant (2) est supérieur à 5 mg/dm³.

9. Dispositif (1) selon l'une des revendications 1 à 8, **caractérisé en ce qu'**il comprend un réservoir (6) apte à contenir une quantité d'eau usée liquide, ledit réservoir appartenant à un circuit de circulation de ladite eau usée liquide entre ledit réservoir (6) et l'entrée (4) du contenant (2) et de retour de l'eau sensiblement décontaminée entre la sortie (5) du contenant (2) vers l'entrée (4) de fluide dudit contenant (2) via le réservoir (6).

10. Dispositif selon l'une des revendications 1 à 9, **caractérisé en ce qu'**il comprend des moyens d'oxygénation de l'eau sensiblement décontaminée avec un fluide gazeux.

11. Procédé de traitement d'une eau usée liquide en vue de sa décontamination dans lequel :
- on choisit un granulat (3) formé de particules solides, puis ;
- on place ledit granulat (3) à l'intérieur d'un contenant (2) adapté pour pouvoir maintenir un contact entre ledit granulat (3) et un flux d'une eau de percolation liquide s'écoulant dans ledit contenant (2), puis ;
- on forme un flux de l'eau de percolation liquide au contact du granulat (3), entre :
∘ une entrée (4) d'eau liquide du contenant (2), et ;
∘ une sortie (5) d'eau liquide du contenant (2);
et on maintient ledit flux pendant une durée déterminée et des conditions adaptées pour établir une communauté, dite communauté de micro-organismes, d'au moins une espèce de micro-organisme(s) en surface et au contact des particules minérales du granulat (3) et former une matrice adaptée au développement de ladite communauté de micro-organismes, puis ;
- on choisit:
∘ au moins un invertébré benthique vivant dans le groupe formé des invertébrés benthiques vivants, dits organismes macro-benthiques, présentant une taille moyenne supérieure à 250 µm et on répartit le(s)dit(s) organisme(s) macro-benthique(s) dans le granulat (3), et ;
∘ au moins un invertébré benthique vivant dans le groupe formé des invertébrés benthiques vivants, dits organismes méio-benthiques, présentant une taille moyenne comprise entre 50 µm et 250 µm et on répartit le(s)dit(s) organisme(s) méio-benthique(s) dans le granulat,
les organismes macro-benthiques et les organismes méio-benthiques formant une communauté d'espèce(s) d'organismes invertébrés benthiques comprenant une proportion d'organismes invertébrés détritivores, exprimée en pourcentage du poids sec des organismes invertébrés détritivores et du poids sec des organismes invertébrés benthiques de ladite communauté d'espèce(s), comprise entre 60% et 80%, puis ;
- on introduit dans le contenant (2) un flux de l'eau usée liquide de façon à permettre sa décontamination et la formation d'un flux d'eau sensiblement décontaminée en sortie (4) d'eau liquide du contenant (2).

12. Procédé selon la revendication 11, **caractérisé en ce qu'**on prélève la communauté d'espèce(s) d'invertébré(s) benthique(s) vivant(s) par filtration dans un sédiment choisi dans le groupe formé des sédiments du lit d'un cours d'eau naturel, des sédiments du lit d'un cours d'eau modifié, des sédiments du lit d'un cours d'eau artificiel et des sédiments d'un bassin d'élevage.

13. Procédé selon l'une des revendications 11 ou 12, **caractérisé en ce qu'**il est adapté pour pouvoir permettre un traitement préventif du colmatage d'un dispositif selon l'une des revendications 1 à 10.

14. Utilisation d'un dispositif selon l'une des revendications 1 à 10 en vue de diminuer le taux d'azote d'une eau contaminée.

15. Utilisation d'un dispositif selon l'une des revendications 1 à 10 en vue de diminuer le taux d'agent phytosanitaire d'une eau contaminée.

## Patentansprüche

1. Vorrichtung (1) zur Reinigung von flüssigem Abwasser, umfassend:
- ein Behältnis (2), das ausgelegt ist, um ein Granulat (3) zurückzuhalten, das aus festen Partikeln gebildet ist, und um einen Kontakt zu ermöglichen zwischen den festen Partikeln des Granulats (3) und dem flüssigen Abwasser, das in das Behältnis (2) fließt, zwischen:
∘ einem Eintritt (4) des flüssigen Abwassers in das Behältnis, und;
∘ einem Austritt (5) eines im Wesentlichen dekontaminierten Wassers des Behältnisses (2);
- eine Gemeinschaft, genannt Gemeinschaft von Mikroorganismen, mindestens einer Spezies von Mikroorganismen, die sich auf der Oberfläche und in Kontakt mit den festen Partikeln des Granulats (3) erstreckt und eine Matrix bildet, die an die Entwicklung der Gemeinschaft von Mikroorganismen angepasst ist;
- mindestens ein lebendes benthisches wirbelloses Tier, ausgewählt aus der Gruppe, gebildet aus lebenden benthischen wirbellosen Tieren, genannt makrobenthische Organismen, die eine mittlere Größe von mehr als 250 µm aufweisen, wobei der/die makrobenthische(n) Organismus/Organismen im Granulat (3) verteilt ist/sind;
- mindestens ein lebendes benthisches wirbelloses Tier, ausgewählt aus der Gruppe, gebildet aus lebenden benthischen wirbellosen Tieren, genannt meiobenthische Organismen, die eine mittlere Größe im Bereich zwischen 50 µm und 250 µm aufweisen, wobei der/die meiobenthische(n) Organismus/Organismen im Granulat (3) verteilt ist/sind
**dadurch gekennzeichnet, dass** die makrobenthischen Organismen und die meiobenthischen Organismen eine Gemeinschaft von Spezies von benthischen wirbellosen Organismen bilden, die eine Proportion von Abfall fressenden wirbellosen Organismen umfassen, ausgedrückt in Prozent des Trockengewichts der Abfall fressenden wirbellosen Organismen und des Trockengewichts der benthischen wirbellosen Organismen der Gemeinschaft von Spezies im Bereich von 60 % bis 80 %.

2. Vorrichtung (1) nach Anspruch 1, **dadurch gekennzeichnet, dass** das Granulat (3) eine mittlere Porosität im Behältnis (2) im Bereich von 20 % und 40 % aufweist.

3. Vorrichtung nach einem der Ansprüche 1 oder 2, **dadurch gekennzeichnet, dass** die makrobenthischen Organismen ausgewählt sind aus der Gruppe, gebildet aus Organismen des Stamms der Achetea, Organismen des Stamms der Ologochaeta, Organismen des Stamms der Arthropoda, und Organismen des Stamms der Mollusken.

4. Vorrichtung (1) nach einem der Ansprüche 1 bis 3, **dadurch gekennzeichnet, dass** die meiobenthischen Organismen ausgewählt sind aus der Gruppe, gebildet aus Organismen des Stamms der Nematheninthen, Organismen des Stamms der Wasserflöhe, Organismen des Stamms der Rotifera, Organismen des Stamms der Copepoda, Organismen des Stamms der Gastrotricha und Organismen des Stamms der Foramifera und Organismen des Stamms der Tardigrada.

5. Vorrichtung (1) nach einem der Ansprüche 1 bis 4, **dadurch gekennzeichnet, dass** die Gemeinschaft von Mikroorganismen einzellige Mikroorganismen umfasst, ausgewählt aus der Gruppe, gebildet aus Bakterien, Algen, Pilze und Protozoen.

6. Vorrichtung (1) nach einem der Ansprüche 1 bis 5, **dadurch gekennzeichnet, dass** die makrobenthischen Organismen makrobenthische Organismen einer Gemeinschaft von mindestens einer lebenden benthischen wirbellosen Spezies sind, ausgewählt aus der Gruppe, gebildet aus Gemeinschaften einer/von lebenden benthischen wirbellosen Spezies, entnommen aus dem Bett eines natürlichen Wasserlaufs, Gemeinschaften einer/von lebenden benthischen wirbellosen Spezies, entnommen aus dem Bett eines modifizierten Wasserlaufs, Gemeinschaften einer/von lebenden benthischen wirbellosen Spezies, entnommen aus dem Bett eines künstlichen Wasserlaufs, und Gemeinschaften einer/von lebenden benthischen wirbellosen Spezies, entnommen aus einem Zuchtbecken.

7. Vorrichtung (1) nach einem der Ansprüche 1 bis 6, **dadurch gekennzeichnet, dass** die meiobenthischen Organismen meiobenthische Organismen einer Gemeinschaft von mindestens einer lebenden benthischen wirbellosen Spezies sind, ausgewählt aus der Gruppe, gebildet aus Gemeinschaften einer/von lebenden benthischen wirbellosen Spezies, entnommen aus dem Bett eines modifizierten Wasserlaufs, Gemeinschaften einer/von lebenden benthischen wirbellosen Spezies, entnommen aus dem Bett eines künstlichen Wasserlaufs, und Gemeinschaften einer/von lebenden benthischen wirbellosen Spezies, entnommen aus einem Zuchtbecken.

8. Vorrichtung (1) nach einem der Ansprüche 1 bis 7, **dadurch gekennzeichnet, dass** das Verhältnis des Trockengewichts, ausgedrückt in mg, der lebenden benthischen wirbellosen Organismen, enthalten im Behältnis (2), und des Volumens (in dm³) des Granulats (3), enthalten im Behältnis (2), größer als 5 mg/dm³ ist.

9. Vorrichtung (1) nach einem der Ansprüche 1 bis 8, **dadurch gekennzeichnet, dass** sie einen Tank (6) umfasst, der ausgelegt ist, um eine Menge von flüssigem Abwasser zu enthalten, wobei der Tank Teil eines Kreislaufs zur Zirkulation des flüssigen Abwassers zwischen dem Tank (6) und dem Eintritt (4) des Behältnisses (2) und zum Rücklauf des im Wesentlichen dekontaminierten Wassers zwischen dem Austritt (5) des Behältnisses (2) zum Eingang (4) des Fluids des Behältnisses (2) über den Tank (6) ist.

10. Verfahren nach einem der Ansprüche 1 bis 9, **dadurch gekennzeichnet, dass** es Mittel zur Anreicherung mit Sauerstoff des im Wesentlichen dekontaminierten Wassers mit einem gasförmigen Fluid umfasst.

11. Verfahren zur Behandlung eines flüssigen Abwassers für seine Dekontaminierung, wobei:
- ein Granulat (3) gewählt wird, das aus festen Partikeln gebildet ist, und;
- das Granulat (3) im Inneren eines Behältnisses (2) angeordnet wird, das ausgelegt ist, um einen Kontakt zwischen dem Granulat (3) und einem Fluss eines flüssigen Versickerungswassers, das in den Behälter (2) strömt, beizubehalten, dann;
- ein Fluss des flüssigen Versickerungswassers in Kontakt mit dem Granulat (3) zwischen:
∘ einem Eintritt (4) von flüssigem Wasser des Behälters (2) und;
∘ einem Austritt (5) von flüssigem Wasser des Behälters (2) gebildet wird;
der Fluss während einer festgelegten Dauer und unter Bedingungen aufrechterhalten wird, die ausgelegt sind, um eine Gemeinschaft, genannt Gemeinschaft von Mikroorganismen, von mindestens einer Spezies von Mikroorganismen auf der Oberfläche und in Kontakt mit mineralischen Partikeln des Granulats (3) aufzubauen und eine Matrix zu bilden, die an die Entwicklung der Gemeinschaft von Mikroorganismen angepasst ist, dann;
- Folgendes gewählt wird:
∘ mindestens ein lebendes benthisches wirbelloses Tier aus der Gruppe, gebildet aus lebenden benthischen wirbellosen Tieren, genannt makrobenthische Organismen, die eine mittlere Größe von mehr als 250 µm aufweisen, wobei der/die makrobenthische(n)Organismus/Organismen im Granulat (3) verteilt ist/sind, und;
∘ mindestens ein lebendes benthisches wirbelloses Tier aus der Gruppe, gebildet aus lebenden benthischen wirbellosen Tieren, genannt meiobenthisch, die eine mittlere Größe im Bereich zwischen 50 µm und 250 µm aufweisen, und der/die meiobenthische(n) Organismus/Organismen im Granulat (3) verteilt wird/werden,
wobei die makrobenthischen Organismen und die meiobenthischen Organismen eine Gemeinschaft von Spezies von benthischen wirbellosen Organismen bilden, die eine Proportion von Abfall fressenden wirbellosen Organismen umfasst, ausgedrückt in Prozent des Trockengewichts der Abfall fressenden wirbellosen Organismen und des Trockengewichts der benthischen wirbellosen Organismen der Gemeinschaft von Spezies im Bereich von 60 % bis 80 %, dann;
- in das Behältnis (2) ein Fluss des flüssigen Abwassers eingeführt wird, um seine Dekontaminierung und die Bildung eines Flusses von im Wesentlichen dekontaminiertem Wasser am Austritt (4) von flüssigem Wasser des Behältnisses (2) zu bilden.

12. Verfahren nach Anspruch 11, **dadurch gekennzeichnet, dass** die Gemeinschaft einer/von lebenden benthischen wirbellosen Spezies durch Filterung von einem Sediment entnommen wird, ausgewählt aus der Gruppe, gebildet aus den Sedimenten des Betts eines natürlichen Wasserlaufs, den Sedimenten des Betts eines modifizierten Wasserlaufs, den Sedimenten des Betts eines künstlichen Wasserlaufs und den Sedimenten eines Zuchtbeckens.

13. Verfahren nach einem der Ansprüche 11 oder 12, **dadurch gekennzeichnet, dass** es ausgelegt ist, um eine präventive Behandlung der Abdichtung einer Vorrichtung nach einem der Ansprüche 1 bis 10 ermöglichen zu können.

14. Verwendung einer Vorrichtung nach einem der Ansprüche 1 bis 10 zur Verringerung des Stickstoffgehalts eines kontaminierten Wassers.

15. Verwendung einer Vorrichtung nach einem der Ansprüche 1 bis 10 zur Verringerung des Gehalts an Pflanzenschutzmittel eines kontaminierten Wassers.

## Claims

1. A device (1) for sanitizing liquid wastewater, comprising:
- a container (2) suitable for holding an aggregate (3) made up of solid particles and for permitting contact between the solid particles of the aggregate (3) and said liquid wastewater flowing in said container (2) between:
∘ an inlet (4) for said liquid wastewater into said container, and;
∘ an outlet (5) for substantially decontaminated water from the container (2);
- a community, referred to as a community of microorganisms, of at least one species of microorganism extending on the surface of and in contact with the solid particles of the aggregate (3) and forming a matrix suitable for the development of said community of microorganisms;
- at least one live benthic invertebrate selected from the group made up of the live benthic invertebrates referred to as macrobenthic organisms, having an average size greater than 250 µm, said macrobenthic organism(s) being distributed in the aggregate (3);
- at least one live benthic invertebrate selected from the group made up of the live benthic invertebrates referred to as meiobenthic organisms, having an average size of from 50 µm to 250 µm, said meiobenthic organism(s) being distributed in the aggregate (3)
wherein the macrobenthic organisms and the meiobenthic organisms form a community of one or more species of benthic invertebrate organisms comprising a proportion of detritivorous invertebrate organisms, expressed as a percentage of the dry weight of the detritivorous invertebrate organisms and of the dry weight of the benthic invertebrate organisms of said community of one or more species, of from 60% to 80%.

2. The device (1) as claimed in claim 1, wherein the aggregate (3) has an average porosity in the container (2) of from 20% to 40%.

3. The device as claimed in one of claims 1 or 2, wherein the macrobenthic organisms are selected from the group made up of the organisms of the phylum of the hirudineans, the organisms of the phylum of the oligochaetes, the organisms of the phylum of the arthropods and the organisms of the phylum of the mollusks.

4. The device (1) as claimed in one of claims 1 to 3, wherein the meiobenthic organisms are selected from the group made up of the organisms of the phylum of the nemathelminths, the organisms of the phylum of the cladocerans, the organisms of the phylum of the rotifers, the organisms of the phylum of the copepods, the organisms of the phylum of the gastrotrichs and the organisms of the phylum of the foraminifers and the organisms of the phylum of the tardigrades.

5. The device (1) as claimed in one of claims 1 to 4, wherein the community of microorganisms comprises unicellular microorganisms selected from the group made up of bacteria, algae, fungi and protozoans.

6. The device (1) as claimed in one of claims 1 to 5, wherein the macrobenthic organisms are the macrobenthic organisms from a community of at least one species of live benthic invertebrate selected from the group made up of the communities of one or more species of live benthic invertebrate(s) collected from the bed of a natural watercourse, the communities of one or more species of live benthic invertebrate(s) collected from the bed of a modified watercourse, the communities of one or more species of live benthic invertebrate(s) collected from the bed of an artificial watercourse and the communities of one or more species of live benthic invertebrate(s) collected from a rearing pond.

7. The device (1) as claimed in one of claims 1 to 6, wherein the meiobenthic organisms are the meiobenthic organisms from a community of at least one species of live benthic invertebrate selected from the group made up of the communities of one or more species of live benthic invertebrate(s) collected from the bed of a natural watercourse, the communities of one or more species of live benthic invertebrate(s) collected from the bed of a modified watercourse, the communities of one or more species of live benthic invertebrate(s) collected from the bed of an artificial watercourse and the communities of one or more species of live benthic invertebrates collected from a rearing pond.

8. The device (1) as claimed in one of claims 1 to 7, wherein the ratio of the dry weight, expressed in mg, of the live benthic invertebrate organisms contained in the container (2) and the volume (in dm³) of the aggregate (3) contained in the container (2) is greater than 5 mg/dm³.

9. The device (1) as claimed in one of claims 1 to 8, comprising a tank (6) capable of containing a quantity of liquid wastewater, said tank belonging to a circuit for circulating said liquid wastewater between said tank (6) and the inlet (4) of the container (2) and for returning the substantially decontaminated water between the outlet (5) of the container (2) towards the fluid inlet (4) of said container (2) via the tank (6).

10. The device as claimed in one of claims 1 to 9, comprising means of oxygenating the substantially decontaminated water with a gaseous fluid.

11. A method for treating liquid wastewater for the purpose of its decontamination, in which:
- an aggregate (3) made up of solid particles is selected, and then;
- said aggregate (3) is placed within a container (2) suitable for being able to maintain contact between said aggregate (3) and a flow of percolating liquid water flowing in said container (2), and then;
- a flow of the percolating liquid water in contact with the aggregate (3) is formed between:
o a liquid water inlet (4) of the container (2), and ;
∘ a liquid water outlet (5) of the container (2);
and said flow is maintained for a specified period together with conditions suitable to establish a community, referred to as a community of microorganisms, of at least one species of microorganism(s) on the surface of and in contact with the mineral particles of the aggregate (3) and to form a matrix suitable for the development of said community of microorganisms, and then;
- the following are selected:
∘ at least one live benthic invertebrate from the group made up of the live benthic invertebrates referred to as macrobenthic organisms, having an average size greater than 250 µm, and said macrobenthic organism(s) is/are distributed in the aggregate (3), and;
∘ at least one live benthic invertebrate from the group made up of the live benthic invertebrates referred to as meiobenthic organisms, having an average size of from 50 µm to 250 µm, and said meiobenthic organism(s) is/are distributed in the aggregate,
the macrobenthic organisms and meiobenthic organisms forming a community of one or more species of benthic invertebrate organisms comprising a proportion of detritivorous invertebrate organisms, expressed as a percentage of the dry weight of the detritivorous invertebrate organisms and of the dry weight of the benthic invertebrate organisms of said community of one or more species, of from 60% to 80%, and then;
- a flow of the liquid wastewater is introduced into the container (2) in such a way as to permit its decontamination and the formation of a flow of substantially decontaminated water at the liquid water outlet (4) of the container (2).

12. The method as claimed in claim 11, wherein the community of one or more species of live benthic invertebrate(s) is collected by filtration from a sediment selected from the group made up of the sediments of the bed of a natural watercourse, the sediments of the bed of a modified watercourse, the sediments of the bed of an artificial watercourse and the sediments of a rearing pond.

13. The method as claimed in one of claims 11 or 12, wherein it is suitable for being able to permit a treatment to prevent clogging of a device as claimed in one of claims 1 to 10.

14. Use of a device as claimed in one of claims 1 to 10 to reduce the level of nitrogen in contaminated water.

15. Use of a device as claimed in one of claims 1 to 10 to reduce the level of plant protection agent in contaminated water.
